# FASCICULE DE BREVET EUROPEEN

(11) **EP 1 329 651 B1**
(45) Date de publication et mention de la délivrance du brevet: **19.10.2005**
(21) Numéro de dépôt: 03075124.2
(22) Date de dépôt: 10.01.2003
(51) Int. Cl.: F16H 61/32, F16H 61/28

(54) **Ensemble de commande perfectionnée pour boite de vitesses robotisée**
Bedienungsanordnung für ein automatisiertes Schaltgetriebe
Control assembly for a robotised gearbox

(30) Priorité: 11.01.2002 FR 0200315
(43) Date de publication de la demande: 23.07.2003
(73) Titulaire: VALEO EMBRAYAGES, 80009 Amiens Cedex 1 (FR)
(72) Inventeur: Lebas, Gilles, 80000 Amiens (FR)
(74) Mandataire: Lemaire, Marc

(56) Documents cités:
- EP-A- 1 116 903
- FR-A- 2 803 357
- US-A- 4 440 035
- US-A- 6 003 649

## Description

La présente invention concerne un ensemble de commande perfectionné pour boîte de vitesses robotisée, et correspondant au préambule de la revendication 1.

On connaît déjà dans l'état de la technique le plus proche, notamment d'après FR-A-2 803 357 (FR-99 16797), un ensemble de commande pour boîte de vitesses robotisée, du type comprenant :
- un doigt de sélection et de passage de vitesses, dit doigt de commande, susceptible d'être entraîné en rotation et en translation par deux organes de commande de rotation et de translation respectivement, ces organes de commande étant motorisés de façon à tourner autour d'axes sensiblement parallèles,
- des premiers moyens de couplage liant en rotation l'organe de commande de rotation avec le doigt de commande tout en autorisant la translation de ce doigt de commande sensiblement parallèlement à l'axe de rotation de l'organe de commande de rotation, ces premiers moyens de couplage comprenant un coulisseau de couplage, solidaire du doigt de commande, l'axe de rotation de l'organe de commande de rotation, formant un axe de rotation et de translation de ce coulisseau de couplage,
- un coulisseau de commande monté coulissant en translation sur un arbre support,
- des seconds moyens de couplage liant en translation le coulisseau de commande avec le doigt de commande tout en autorisant la rotation du doigt de commande autour de l'axe de rotation de l'organe de commande de rotation indépendamment du coulisseau de commande,
- des moyens d'immobilisation en rotation du coulisseau de commande autour de l'axe de l'arbre support, et
- des moyens de transformation du mouvement de rotation de l'organe de commande de translation en mouvement de translation du coulisseau de commande.

Généralement, les mouvements de rotation et de translation du doigt de commande permettent de réaliser, respectivement, la sélection et le passage d'un rapport de vitesses.

Dans l'ensemble de commande du type précité, selon le document ci-dessus, l'organe de commande de rotation forme l'arbre support portant le coulisseau de commande.

Par ailleurs, le coulisseau de commande comprend deux parties, d'entrée et de sortie de mouvement respectivement, déplaçables en translation l'une par rapport à l'autre parallèlement aux axes de rotation des organes de commande. La partie d'entrée de mouvement est entraînée par les moyens de transformation du mouvement de rotation de l'organe de commande de translation en mouvement de translation du coulisseau de commande. La partie de sortie de mouvement entraîne le doigt de commande par l'intermédiaire des seconds moyens de couplage. Le coulisseau de commande comprend de plus des moyens d'accumulation d'énergie intercalés entre les parties d'entrée et de sortie de mouvement.

Enfin, les moyens de transformation du mouvement de rotation de l'organe de commande de translation en mouvement de translation du coulisseau de commande comprennent des moyens complémentaires de vissage reliant ce coulisseau de commande avec l'organe de commande de translation. Ces moyens de vissage comprennent une douille à billes, portée par le coulisseau de commande, plus particulièrement par la partie d'entrée de mouvement de ce coulisseau de commande, vissée autour de l'organe de commande de translation qui a une forme générale d'arbre fileté.

Le coulisseau de commande est donc porté par les deux organes de commande de rotation et de translation. La douille à billes, reliant par vissage le coulisseau de commande avec l'organe de commande de translation, forme des moyens d'immobilisation en rotation du coulisseau de commande autour de l'organe de commande de rotation.

Or, l'utilisation, dans un ensemble de commande tel que décrit dans FR-A-2 803 357, d'un coulisseau de commande porté par les deux organes de commande de rotation et de translation , notamment au moyen d'une douille à billes vissée autour de l'organe de commande de translation, limite les possibilités d'optimisation de l'agencement des différents organes constituant cet ensemble de commande ainsi que les possibilités de réduction de l'encombrement de l'ensemble de commande.

L'invention a notamment pour but d'optimiser l'agencement et l'encombrement d'un ensemble de commande tel que décrit dans FR-A-2 803 357.

A cet effet, l'invention a pour objet un ensemble de commande pour boîte de vitesses robotisée, du type précité, caractérisé en ce que l'organe de commande de translation est couplé à un arbre moteur de commande de translation par l'intermédiaire de moyens de réduction à train d'engrenage épicycloïdal munis d'une couronne de sortie pour commande de translation couplée en rotation à l'organe de commande de translation.

Suivant des caractéristiques de différents modes de réalisation de cet ensemble de commande pour boîte de vitesses robotisée :
- les moyens d'immobilisation en rotation du coulisseau de commande sont portés par une paroi solidaire du carter de la boîte de vitesses ;
- la came est formée par une rainure hélicoïdale, ménagée dans l'organe de commande de translation, coopérant avec un pion roulant porté par le coulisseau de commande ;
- la couronne de sortie pour commande de translation est liée à l'organe de commande de translation par des moyens de limitation de couple ;
- l'organe de commande de translation a une forme générale de tambour, le rayon du contour externe de cet organe de commande de translation étant, de préférence, sensiblement inférieur ou égal au rayon du contour externe de la couronne de sortie pour commande de translation ;
- l'organe de commande de translation en forme générale de tambour forme un logement pour des moyens de guidage de la couronne de sortie pour commande de translation ;
- l'organe de commande de rotation est couplé à un arbre moteur de commande de rotation par l'intermédiaire de moyens de réduction à train d'engrenage épicycloïdal munis d'une couronne de sortie pour commande de rotation couplée en rotation à l'organe de commande de rotation ;
- la couronne de sortie pour commande de rotation est liée à l'organe de commande de rotation par des moyens de limitation de couple ;
- l'organe de commande de rotation est lié en rotation à une clé d'interdiction de passage simultané de deux rapports de vitesses, cette clé étant immobilisée axialement ;
- le coulisseau de couplage est monté coulissant en translation sur un arbre de guidage distinct de l'organe de commande de rotation, les premiers moyens de couplage comprenant la clé d'interdiction de passage simultané de deux rapports de vitesses, le coulisseau de couplage étant lié en rotation à la clé par l'intermédiaire du doigt de commande coopérant comme une clavette avec cette clé ;
- l'organe de commande de rotation a une forme générale de tambour délimitant un logement pour l'arbre de guidage et le coulisseau de couplage ;
- le coulisseau de couplage et l'organe de commande de rotation sont montés coulissants en translation l'un sur l'autre, les premiers moyens de couplage comprenant des cannelures complémentaires ménagées sur l'organe de commande de rotation et le coulisseau de couplage, autorisant la translation du coulisseau de couplage sensiblement parallèlement à l'axe de rotation de l'organe de commande de rotation ;
- l'arbre support portant le coulisseau de commande est distinct des organes de commande de rotation et de translation et s'étend sensiblement parallèlement aux axes de rotation de ces organes de commande ;
- les seconds moyens de couplage comprennent :
   o un doigt de couplage, porté par un premier élément choisi parmi les coulisseaux de commande et de couplage, et
   o une rainure sensiblement transversale à l'arbre support, ménagée dans un second élément choisi parmi les coulisseaux de couplage et de commande, avec laquelle le doigt de couplage coopère ;
- l'organe de commande de rotation forme l'arbre support portant le coulisseau de commande ;
- les seconds moyens de couplage comprennent :
   o des moyens formant palier, portés par le coulisseau de commande, dans lesquels tourillonne le coulisseau de couplage, et
   o des moyens de positionnement relatif axial des coulisseaux de commande et de couplage ;
- les moyens de positionnement relatif axial des coulisseaux de commande et de couplage comprennent deux butées annulaires, solidaires axialement du coulisseau de couplage, coopérant avec deux extrémités correspondantes du coulisseau de commande ;
- le coulisseau de commande comprend une chape munie de deux joues formant chacune palier de guidage du coulisseau de couplage ;
- le coulisseau de couplage comprend deux épaulements de positionnement relatif axial des coulisseaux de commande et de couplage coopérant avec les joues de la chape ;
- le coulisseau de commande comprend :
   o deux parties, d'entrée et de sortie de mouvement respectivement, déplaçables en translation l'une par rapport à l'autre, la partie d'entrée de mouvement étant entraînée par les moyens de transformation du mouvement de rotation de l'organe de commande de translation en mouvement de translation du coulisseau de commande, la partie de sortie de mouvement entraînant le doigt de commande par l'intermédiaire des seconds moyens de couplage, et
   o des moyens d'accumulation d'énergie intercalés entre les parties d'entrée et de sortie de mouvement ;
- les moyens d'accumulation d'énergie comprennent un ressort de compression intercalé entre les parties d'entrée et de sortie de mouvement ;
- le ressort d'accumulation d'énergie est de type hélicoïdal et s'étend autour de l'axe de rotation de l'organe de commande de rotation ;
- les moyens de réduction associés respectivement à l'arbre moteur de commande de rotation et à l'arbre moteur de commande de translation sont logés dans des premier et second boîtiers respectivement, ces premier et second boîtiers étant formés d'une seule pièce munie d'une bride de fixation sur le carter de la boîte de vitesses ;
- la pièce formant les boîtiers est munie de moyens d'immobilisation en rotation de la couronne fixe des moyens de réduction associés à l'arbre moteur de commande de rotation et de la couronne fixe des moyens de réduction associés à l'arbre moteur de commande de translation ;
- les moyens d'immobilisation en rotation des couronnes fixes comprennent des formes complémentaires ménagées sur la surface interne de la pièce formant les boîtiers et le contour externe des couronnes fixes.

L'invention sera mieux comprise à la lecture de la description qui va suivre, donnée uniquement à titre d'exemple et faite en se référant aux dessins dans lesquels :
- la figure 1 est une vue schématique d'un ensemble de commande pour boîte de vitesses robotisée, selon un premier mode de réalisation de l'invention ;
- les figures 2 à 5 sont des vues en perspective d'un ensemble de commande pour boîte de vitesses robotisée, selon des deuxième à cinquième modes de réalisation de l'invention, respectivement ;
- la figure 6 est une vue en coupe transversale d'un ensemble de commande pour boîte de vitesses robotisée, selon un sixième mode de réalisation de l'invention ;
- la figure 7 est une vue en perspective de l'ensemble de commande pour boîte de vitesses robotisée selon le sixième mode de réalisation ;
- la figure 8 est une vue partielle, en perspective, d'un carter de boîte de vitesses sur lequel est destiné à être agencé l'ensemble de commande pour boîte de vitesses robotisée selon le sixième mode de réalisation ;
- la figure 9 est une vue en perspective des moyens de motorisation de l'organe de commande de rotation ;
- la figure 10 est une vue en coupe axiale des moyens de motorisation de l'organe de commande de rotation ;
- les figures 11 et 12 sont des vues analogues aux figures 9 et 10 montrant les moyens de motorisation de l'organe de commande de translation.

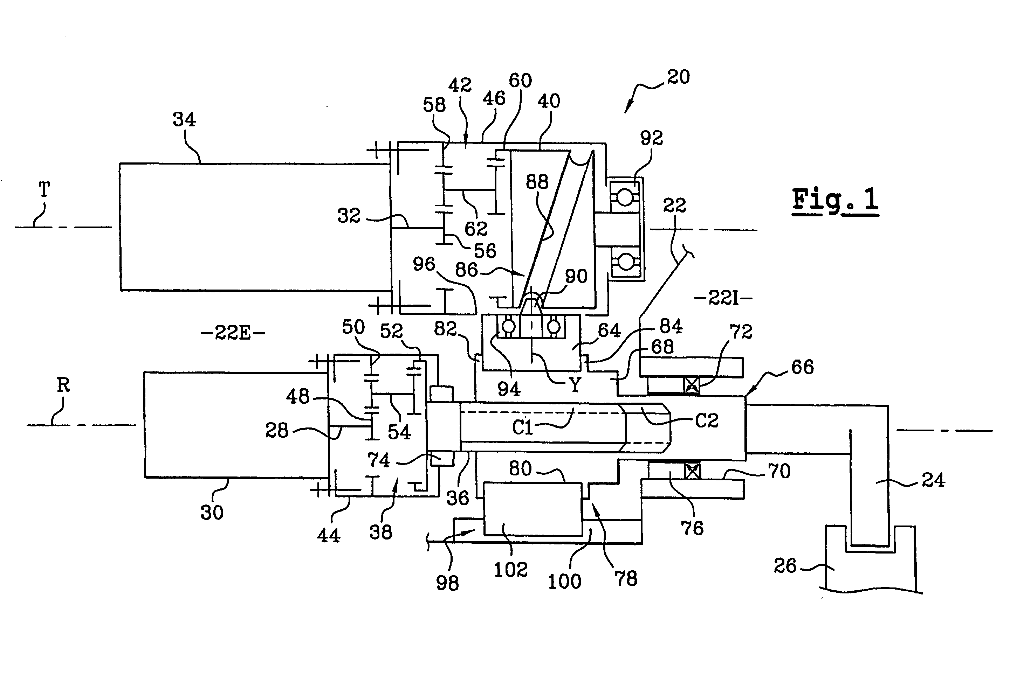

On a représenté sur la figure 1 un ensemble de commande pour boîte de vitesses robotisée de véhicule automobile, selon un premier mode de réalisation de l'invention, désigné par la référence générale 20.

Sur cette figure 1, on a représenté un carter 22 de la boîte de vitesses séparant des espaces intérieur 22I et extérieur 22E à cette boîte de vitesses.

De façon classique, l'ensemble de commande 20 comprend un doigt de sélection et de passage de vitesses, appelé par la suite doigt de commande 24, destiné à coopérer avec des crosses de commande de la boîte de vitesses, logées dans le carter 22. Sur la figure 1, on a schématisé une des crosses de commande 26.

L'ensemble de commande 20 comprend également des moyens motorisés destinés à entraîner le doigt de commande 24 en rotation et en translation. Dans l'exemple illustré, les mouvements de rotation et de translation du doigt 24 de commande permettent de réaliser, respectivement, la sélection et le passage d'un rapport de vitesses. Toutefois, en variante, la sélection et le passage d'un rapport de vitesses pourraient être réalisés, respectivement, par les mouvements de translation et de rotation du doigt de commande 24.

Les moyens motorisés, agencés à l'extérieur du carter 22 de boîte de vitesses, comprennent deux moteurs classiques, respectivement de commande de rotation et de translation du doigt de commande 24.

Le moteur de commande de rotation, entraînant un arbre 28 de commande de rotation du doigt 24, est logé dans un boîtier fixe 30. Le moteur de commande de translation, entraînant un arbre 32 de commande de translation du doigt 24, est logé dans un boîtier fixe 34.

On notera que les arbres moteurs de commande de rotation 28 et de commande de translation 32 tournent autour d'axes respectifs R, T sensiblement parallèles. Ces axes R, T sont parallèles à une direction générale axiale.

L'arbre moteur 28 de commande de rotation est couplé à un organe 36 de commande de rotation du doigt 24 par l'intermédiaire de moyens de réduction classiques 38 du type à train d'engrenage épicycloïdal.

De même, l'arbre moteur 32 de commande de translation est couplé à un organe 40 de commande de rotation du doigt 24 par l'intermédiaire de moyens de réduction classiques 42 du type à train d'engrenage épicycloïdal.

Les moyens de réduction 38, 42 sont logés dans des boîtiers fixes correspondants 44, 46 sur lesquels sont fixés, de façon connue en soi, les boîtiers 30, 34 de moteur.

Les moyens de réduction 38, associés à l'arbre moteur 28 de commande de rotation, comprennent un pignon planétaire 48 d'entrée, couplé en rotation avec l'arbre moteur 28 de commande de rotation, une couronne fixe 50, une couronne de sortie 52, appelée couronne de sortie pour commande de rotation, et des pignons satellites à double denture dont un seul 54 est représenté sur la figure 1. Une première denture des pignons satellites 54 engrène en permanence avec le pignon d'entrée 48 et la couronne fixe 50. La seconde denture des pignons satellites 54 engrène en permanence avec la couronne de sortie 52 pour commande de rotation.

Les moyens de réduction 42, associés à l'arbre moteur 32 de commande de translation, comprennent un pignon planétaire 56 d'entrée, couplé en rotation avec l'arbre moteur 32 de commande de translation, une couronne fixe 58, une couronne de sortie 60, appelée couronne de sortie pour commande de translation, et des pignons satellites à double denture dont un seul 62 est représenté sur la figure 1. Une première denture des pignons satellites 62 engrène en permanence avec le pignon d'entrée 56 et la couronne fixe 58. La seconde denture des pignons satellites 62 engrène en permanence avec la couronne de sortie 60 pour commande de translation.

Les couronnes de sortie 52, 60 pour commande de rotation et de translation sont couplées en rotation avec, respectivement, les organes 36, 40 de commande de rotation et de translation.

On notera que les organes 36, 40 de commande de rotation et de translation sont destinés à tourner respectivement autour des axes R, T.

L'ensemble de commande 20 comprend également un coulisseau de commande 64 monté coulissant en translation sur un arbre support. Dans le premier mode de réalisation de l'invention, l'arbre support est formé par l'organe de commande de rotation 36.

Des premiers moyens de couplage 66 lient en rotation l'organe 36 de commande de rotation avec le doigt de commande 24 tout en autorisant la translation de ce doigt de commande 24 sensiblement parallèlement à l'axe R de rotation de l'organe 36 de commande de rotation.

Les premiers moyens de couplage 66 comprennent un coulisseau de couplage 68 solidaire du doigt de commande 24. L'axe R de rotation de l'organe 36 de commande de rotation forme un axe de rotation et de translation du coulisseau de couplage 68.

Dans le premier mode de réalisation de l'invention, l'organe 36 de commande de rotation et le coulisseau de couplage 68 sont montés coulissants en translation l'un sur l'autre, notamment comme deux éléments télescopiques.

L'organe 36 de commande de rotation et le coulisseau de couplage 68 comprennent des cannelures axiales complémentaires C1, C2 autorisant la translation du coulisseau de couplage 68 sensiblement parallèlement à l'axe R tout en liant en rotation l'organe 36 de commande de rotation avec ce coulisseau de couplage 68.

On notera que le coulisseau de couplage 68 s'étend à travers un orifice 70 ménagé dans la paroi 22 du carter. Des moyens d'étanchéité annulaires 72 sont intercalés radialement entre le coulisseau de couplage 68 et le bord de l'orifice 70.

On notera également que l'ensemble comprenant l'organe 36 de commande de rotation, la couronne de sortie 52 pour commande de rotation et le coulisseau de couplage 68 est guidé en rotation autour de l'axe R à l'aide notamment de deux paliers à roulements classiques 74, 76 portés respectivement par le boîtier 44 de train d'engrenage et le carter 22.

Des seconds moyens de couplage 78 lient en translation le coulisseau de commande 64 avec le doigt de commande 24 tout en autorisant la rotation de ce doigt 24 autour de l'axe R de rotation de l'organe 36 de commande de rotation indépendamment du coulisseau de commande 64.

Dans le premier mode de réalisation de l'invention, les seconds moyens de couplage 78 comprennent des moyens formant palier, plus particulièrement un palier lisse 80 ménagé dans le coulisseau de commande 64. Le coulisseau de couplage 68 est susceptible de tourillonner dans ce palier lisse 68.

Par ailleurs, les seconds moyens de couplage 78 comprennent des moyens de positionnement relatifs axial des coulisseaux de commande 64 et de couplage 68 comportant, par exemple, deux butées annulaires 82, 84 délimitées par des nervures annulaires solidaires axialement du coulisseau de couplage 68. Ces butées annulaires 82, 84 coopèrent avec deux extrémités axiales correspondantes du coulisseau de commande 64.

L'ensemble de commande 20 comprend encore des moyens de transformation du mouvement de rotation de l'organe 40 de commande de translation en mouvement de translation du coulisseau de commande 64 comportant des moyens complémentaires 86 à came portés par l'organe 40 de commande de translation et le coulisseau de commande 64. De préférence, la came est formée par une rainure hélicoïdale 88 ménagée sur le contour externe de l'organe 40 de commande qui a une forme générale de tambour d'axe T.

La rainure hélicoïdale 88 est destinée à coopérer avec un pion roulant 90 porté par le coulisseau de commande 64.

On notera que l'ensemble comprenant l'organe 40 de commande de translation et la couronne de sortie 60 pour commande de translation est guidé en rotation autour de l'axe T à l'aide notamment d'un palier à roulement classique 92 porté par le boîtier 46 de train à engrenage.

On notera également que le pion roulant 90 est guidé en rotation autour d'un axe Y sensiblement orthogonal aux deux axes T, R à l'aide d'un palier à roulement classique 94 porté par le coulisseau de commande 64.

Le pion roulant 90 s'étend, au moins partiellement, à l'intérieur du boîtier 46, à travers une ouverture 96 ménagée dans ce boîtier 46.

De préférence, le rayon du contour externe de l'organe 40 de commande de translation, en forme générale de tambour, est sensiblement inférieur ou égal au rayon du contour externe de la couronne de sortie 60 pour commande de translation.

Le coulisseau de commande 64 est immobilisé en rotation autour de l'axe de l'organe 36 de commande de rotation (formant arbre support) à l'aide de moyens 98 portés par un organe indépendant cinématiquement de l'organe 40 de commande de translation.

De préférence, les moyens d'immobilisation en rotation 98 comprennent un élément de guidage axial 100 porté par une paroi solidaire du carter 22 de la boîte de vitesses. Cet élément 100 forme un élément contenant ou contenu coopérant avec un élément de guidage axial complémentaire 102 ménagé sur le coulisseau de commande 64.

Les principaux aspects du fonctionnement de l'ensemble de commande 20 selon l'invention sont analogues à ceux d'un ensemble de commande classique tel que décrit, par exemple, dans FR-A-2 803 357 (FR-99 16 797).

On notera, toutefois, que les moyens complémentaires 86 à came (transformant le mouvement de rotation de l'organe 40 de commande de translation en mouvement de translation du coulisseau de commande 64) permettent de limiter la distance entre les deux axes T, R de rotation des organes 36, 40 de commande de rotation et de translation, et ainsi de réduire l'encombrement de l'ensemble de commande.

La rainure hélicoïdale 88, ménagée sur l'organe 40 de commande de translation en forme générale de tambour de relativement grand diamètre, a un pas faible optimisant la coopération avec le pion roulant 90.

Par ailleurs, du fait que la rainure hélicoïdale 88 est ménagée sur un tambour de relativement grand diamètre, le pion roulant 90 est relativement proche de l'axe R, limitant ainsi le porte-à-faux du pion roulant 90 par rapport à cet axe R.

Les moyens 98 d'immobilisation en rotation du coulisseau de commande 64, portés par un organe indépendant cinématiquement de l'organe 40 de commande de translation, peuvent être agencés sur un emplacement peu encombrant, notamment en dehors de l'espace séparant les deux axes parallèles R, T que l'on veut réduire au maximum pour minimiser l'encombrement de l'ensemble de commande 20.

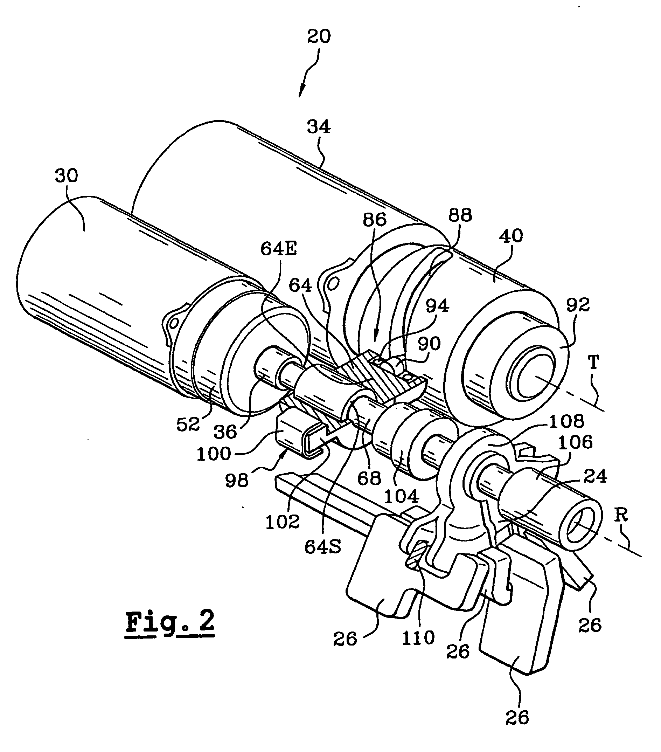

Sur les figures 2 à 12, on a représenté un ensemble de commande 20 pour boîte de vitesses robotisée selon des deuxième à sixième modes de réalisation de l'invention.

Sur les figures 2 à 12, les éléments analogues à ceux de la figure 1 ou d'une autre figure sont désignés par des références identiques.

Sur la figure 2, qui représente un ensemble de commande 20 selon un second mode de réalisation de l'invention, on a illustré quatre crosses de commande 26 susceptibles d'être en prise chacune avec le doigt de commande 24 solidaire du coulisseau de couplage 68.

L'organe 36 de commande de rotation est lié en rotation avec le coulisseau de couplage 68 à l'aide de moyens, non représentés sur la figure 2, du même type que les premiers moyens de couplage 66 à cannelures complémentaires représentés sur la figure 1.

Le coulisseau de commande 64, représenté partiellement en coupe sur la figure 2, est lié en translation au coulisseau de couplage 68 (et donc au doigt de commande 24) à l'aide de moyens de couplage du même type que les seconds moyens de couplage 78 représentés sur la figure 1, autorisant la rotation du doigt de commande 24 autour de l'axe R indépendamment du coulisseau de commande 64.

Toutefois, dans ce second mode de réalisation de l'invention, le coulisseau de commande 64 comprend deux parties, respectivement d'entrée 64E et de sortie 64S de mouvement, entre lesquelles sont intercalés des moyens d'accumulation d'énergie qui seront décrits plus en détail par la suite à propos de l'ensemble de commande 20 selon le troisième mode de réalisation de l'invention.

Les moyens 98 d'immobilisation en rotation du coulisseau de commande 64 autour de l'axe R de l'organe 36 de commande de rotation sont analogues à ceux représentés sur la figure 1. Plus particulièrement, l'élément de guidage axial 100, porté par le carter 22, est de type contenant alors que l'élément de guidage axial complémentaire 102, porté par le coulisseau de commande 64, est de type contenu.

On notera que le coulisseau de couplage 68 est guidé en rotation autour de l'axe R notamment au moyen de paliers à roulement classiques 104, 106.

Sur la figure 2, on a représenté une clé 108, de type classique, destinée à interdire le passage simultané de deux rapports de vitesses.

Le coulisseau de couplage 68 peut coulisser librement en translation à travers la clé 108. Cette dernière est immobilisée axialement à l'aide de moyens classiques 110. Le coulisseau de couplage 68 est lié en rotation à la clé 108 par l'intermédiaire du doigt de commande 24 qui coopère comme une clavette avec la clé 108.

On notera donc que la clé 108 est liée en rotation avec l'organe 36 de commande de rotation par l'intermédiaire du coulisseau de couplage 68.

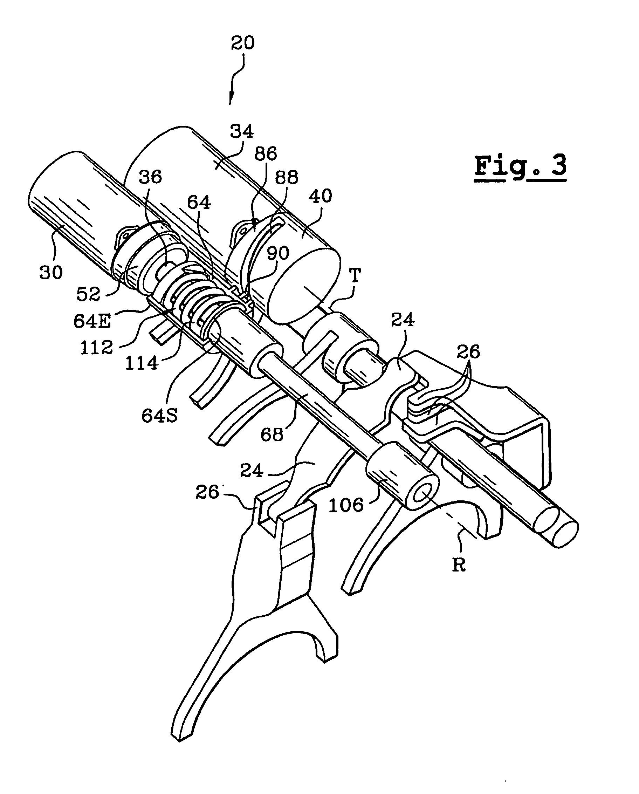

L'ensemble de commande 20 selon le troisième mode de réalisation de l'invention, représenté sur la figure 3, comporte un double doigt de commande 24 solidaire du coulisseau de couplage 68.

Le coulisseau de couplage 68 est lié en rotation à l'organe 36 de commande de rotation à l'aide de moyens du même type que ceux décrits pour les modes de réalisation précédents autorisant la translation du doigt de commande 24 sensiblement parallèlement à l'axe R.

Dans la figure 3, les deux parties d'entrée 64E et de sortie 64S de mouvement du coulisseau de commande sont représentées plus en détail que sur la figure 2.

La partie d'entrée de mouvement 64E est entraînée par les moyens de transformation du mouvement de rotation de l'organe 40 de commande de translation en mouvement de translation du coulisseau de commande 64, c'est-à-dire par la rainure hélicoïdale 88 coopérant avec le pion roulant 90.

La partie de sortie de mouvement 64S du coulisseau de commande entraîne le doigt de commande 24 par l'intermédiaire de moyens analogues aux seconds moyens de couplage 78 du premier mode de réalisation de l'invention liant en translation le coulisseau de commande 64 avec le coulisseau de couplage 68 tout en autorisant la rotation de ce coulisseau de couplage 68 autour de l'axe R, indépendamment du coulisseau de commande 64.

Les parties d'entrée 64E et de sortie 64S de mouvement du coulisseau de commande sont déplaçables en translation l'une par rapport à l'autre, à l'encontre de moyens élastiques d'accumulation d'énergie 112 intercalés entre ses parties 64E, 64S.

De préférence, les moyens d'accumulation d'énergie 112 comprennent un ressort de compression, de type hélicoïdal, s'étendant autour de l'axe R, intercalé entre les parties d'entrée 64E et de sortie 64S de mouvement.

Le fonctionnement des moyens d'accumulation d'énergie 112 est conforme aux principes classiques de fonctionnement de ce type de moyens, par exemple conforme aux principes décrits dans FR-A-2 803 357 (FR-99 16 797).

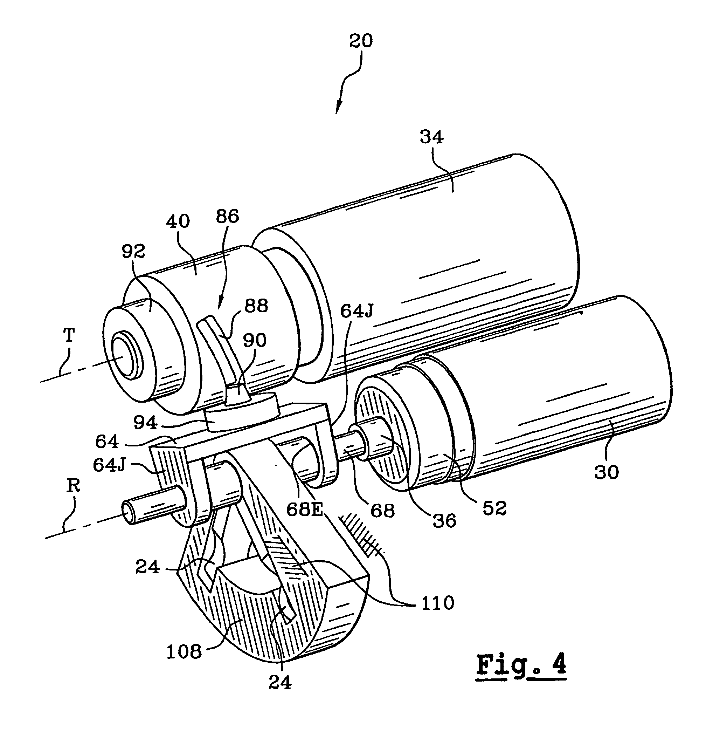

Comme dans le troisième mode de réalisation de l'invention, l'ensemble 20 selon le quatrième mode de réalisation de l'invention, représenté sur la figure 4, comprend un double doigt de commande 24 solidaire du coulisseau de couplage 68.

Dans le quatrième mode de réalisation de l'invention, le coulisseau de commande 64 a une forme générale de chape et comprend deux joues 64J formant chacune un palier de guidage en rotation du coulisseau de couplage 68 s'étendant à travers les joues 64J.

Le coulisseau de couplage 68 comprend deux épaulements 68E, dont un seul est visible sur la figure 4, coopérant avec les joues 64J de la chape pour positionner axialement entre eux les coulisseaux de commande 64 et de couplage 68.

Comme dans le second mode de réalisation de l'invention, l'ensemble de commande 20 selon le quatrième mode de réalisation de l'invention comprend une clé 108 d'interdiction de passage simultané de deux rapports de vitesses. Le coulisseau de couplage 68 coulisse en translation à travers la clé 108. Le coulisseau de couplage 68 est lié en rotation à la clé 108 par l'intermédiaire du double doigt de commande 24 qui coopère comme une clavette avec cette clé 108.

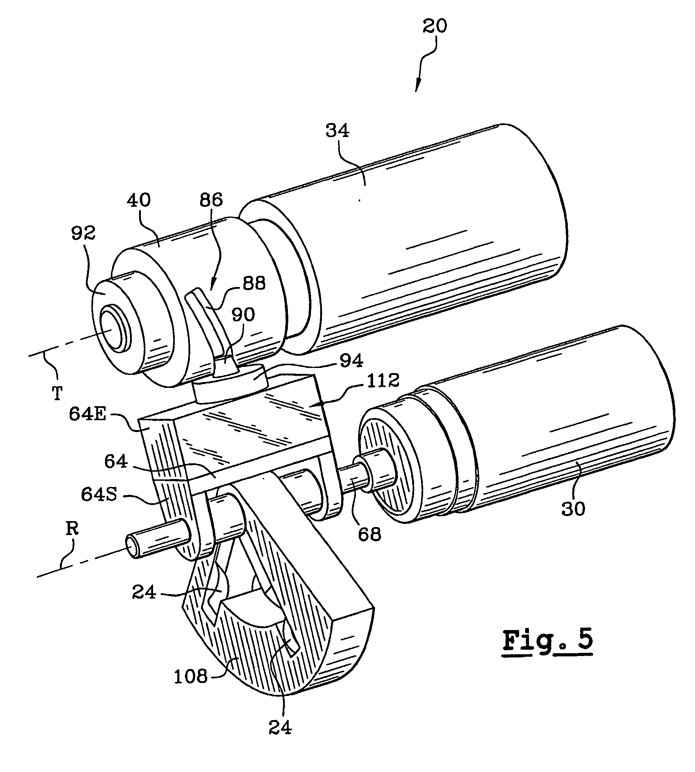

L'ensemble de commande 20 selon le cinquième mode de réalisation de l'invention, représenté sur la figure 5, est proche de celui représenté sur la figure 4.

Toutefois, dans ce cas, le coulisseau de commande 64 comprend des moyens d'accumulation d'énergie 112, analogues à ceux du troisième mode de réalisation de l'invention, intercalés entre les parties d'entrée 64E et de sortie 64S de mouvement du coulisseau 64.

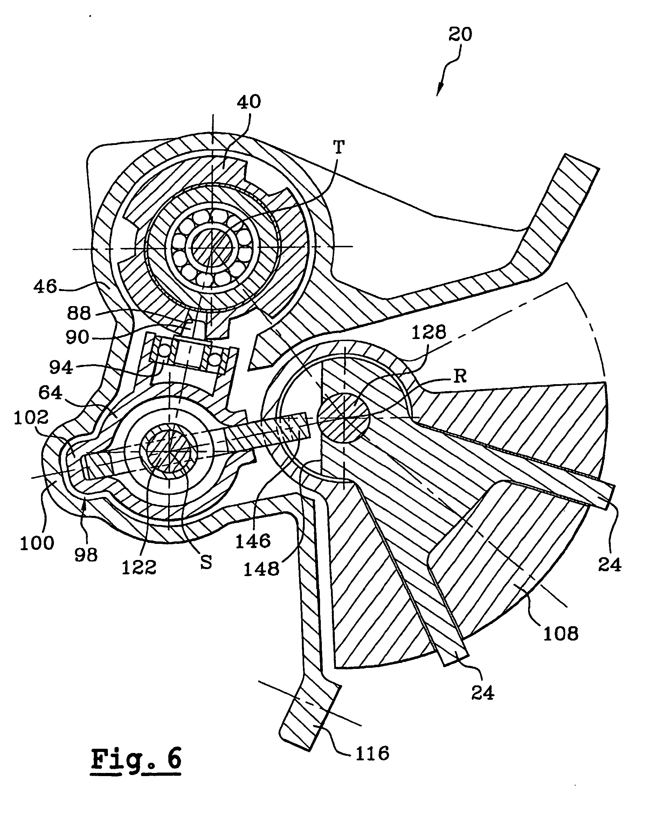

L'ensemble de commande 20 selon le sixième mode de réalisation de l'invention est représenté sur les figures 6 à 12.

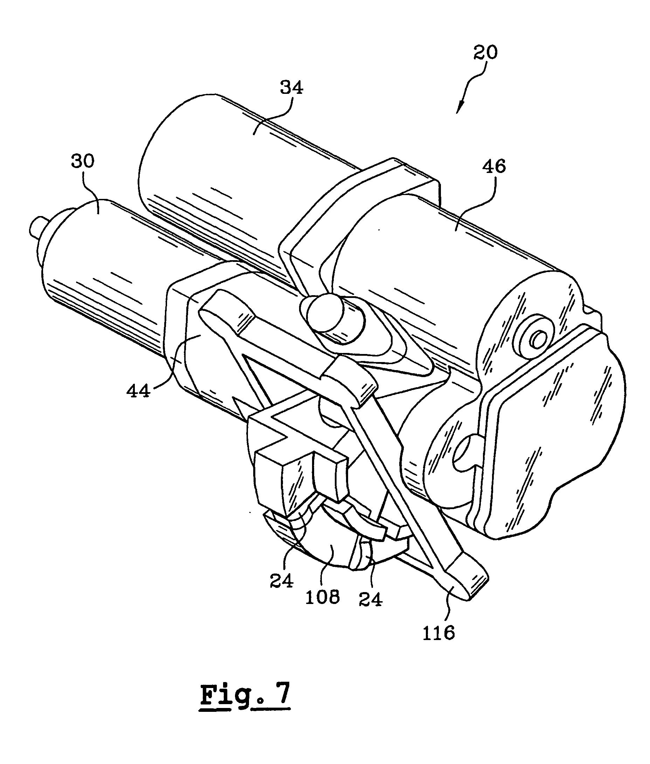

Dans ce cas, les boîtiers 44, 46 de train d'engrenage épicycloïdal sont formés d'une seule pièce munie d'une bride 116 de fixation sur le carter 22 (voir figures 6 et 7). Cette pièce formant les boîtiers 44, 46 est munie de moyens d'immobilisation en rotation de la couronne fixe 50 des moyens de réduction 38, associés à l'arbre moteur 28 de commande de rotation, et de la couronne fixe 58 des moyens de réduction 42, associés à l'arbre moteur 32 de commande de translation. Ces moyens d'immobilisation en rotation comprennent, de préférence, des formes complémentaires ménagées sur la surface interne de la pièce formant les boîtiers 44, 46 et le contour externe des couronnes fixes 50, 52.

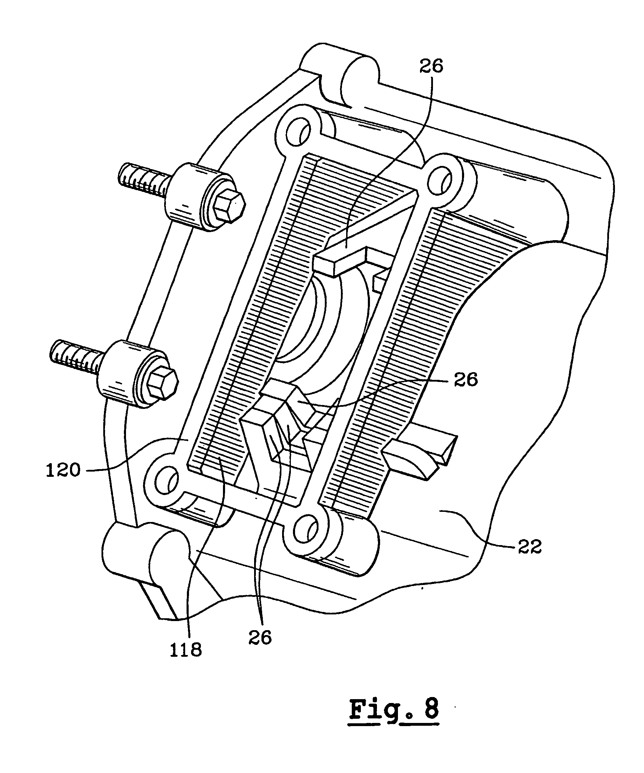

La bride 116 est destinée à être fixée sur le bord d'une ouverture 118 d'accès à l'intérieur de la boîte de vitesses, ménagée dans le carter 22. Un joint plat d'étanchéité 120 est destiné à être intercalé entre la bride de fixation 116 et le bord de l'ouverture d'accès 118 (voir figure 8).

L'ensemble de commande 20 selon le sixième mode de réalisation de l'invention comporte un double doigt de commande 24 et une clé 108 d'interdiction de passage simultané de deux rapports de vitesse.

Le double doigt de commande 24 est destiné à coopérer avec des crosses de commande 26, logées dans la boîte de vitesses, représentées sur la figure 8.

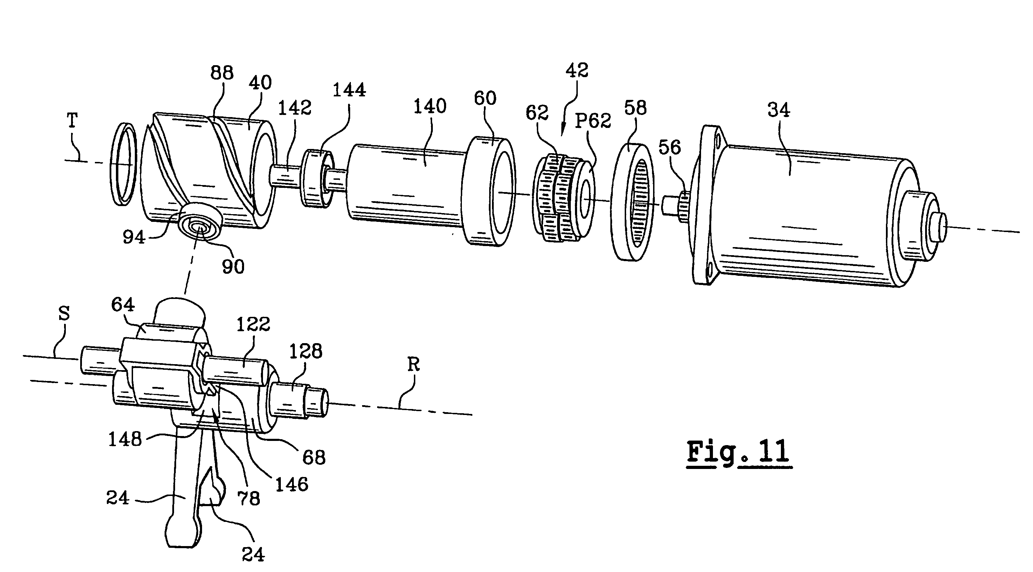

A la différence des précédents modes de réalisation de l'invention, dans l'ensemble de commande 20 selon le sixième mode de réalisation de l'invention, le coulisseau de commande 64 est porté par un arbre support 122, d'axe S, distinct des organes de commande de rotation 36 et de translation 40 (voir notamment figures 6 et 11). Cet arbre support 122 s'étend sensiblement parallèlement aux axes R, T de rotation des organes de commande de rotation et de translation. L'axe S est distinct des axes R, T.

En se référant plus particulièrement à la figure 6, on voit que les moyens 98 d'immobilisation en rotation du coulisseau de commande 64 autour de l'axe S de l'arbre support 122 comprennent un élément contenant de guidage axial 100, ménagé sur une paroi délimitant les boîtiers 44, 46 de train à engrenage épicycloïdal. Cet élément contenant 100 est destiné à coopérer avec l'élément contenu complémentaire 102 solidaire du coulisseau de commande 64.

On notera donc que l'élément contenant 100 d'immobilisation en rotation du coulisseau de commande 64 est solidaire du carter 22 par l'intermédiaire de la paroi délimitant les boîtiers 44, 46.

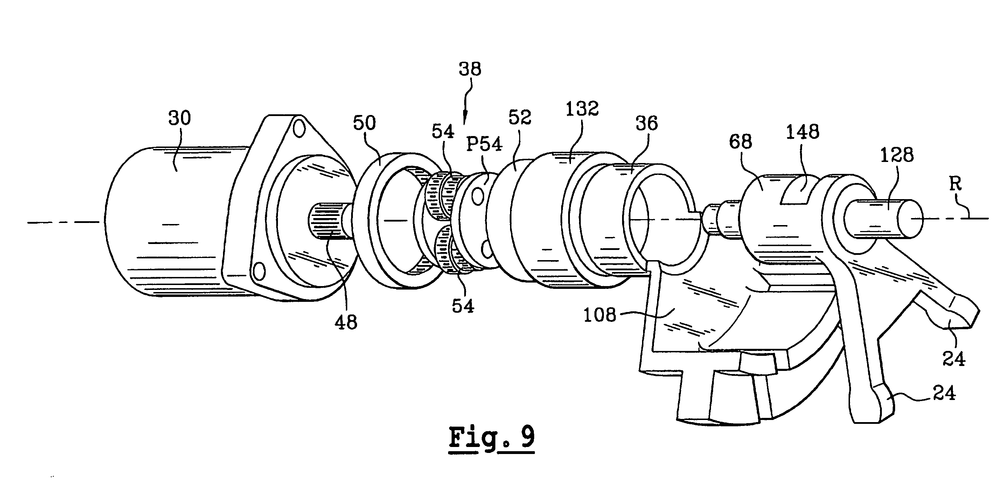

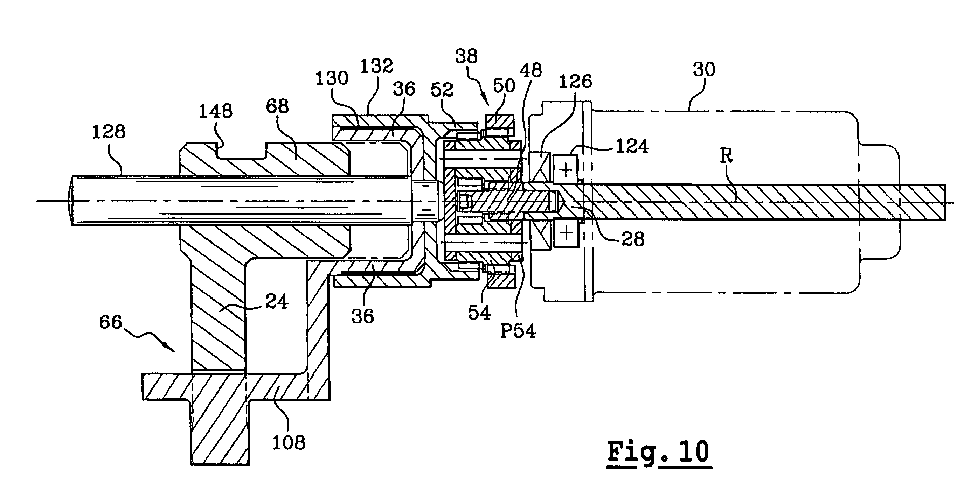

Sur les figures 9 et 10, on a représenté plus en détail les éléments de la chaîne cinématique reliant l'arbre moteur 28 de commande de rotation avec l'organe 36 de commande de rotation.

On notera que l'arbre 28 de commande de rotation est guidé en rotation par rapport au boîtier 30 de moteur de commande de rotation au moyen d'un palier à roulement classique 124. On notera également qu'un joint d'étanchéité classique 126 est intercalé radialement entre l'arbre 28 de commande de rotation et le boîtier 30 de moteur de commande de rotation (voir figure 10).

Les moyens de réduction 38, associés à l'arbre moteur 28 de commande de rotation, sont représentés en détail sur les figures 9 et 10, ces dernières montrant notamment un porte-satellite P54 portant les pignons satellites 54.

Dans le sixième mode de réalisation de l'invention, le coulisseau de couplage 68 est monté coulissant en translation sur un arbre de guidage 128, d'axe coïncidant avec l'axe R de rotation de l'organe 36 de commande de rotation. Toutefois, l'arbre de guidage 128 est distinct de l'organe 36 de commande de rotation.

L'arbre de guidage 128 participe au guidage en rotation et au centrage de différents éléments de la chaîne cinématique représentée sur les figures 9 et 10. Ainsi, l'arbre de guidage 128 participe au centrage du porte-satellite P54 et au guidage en rotation de l'organe 36 de commande de rotation.

On notera que l'organe 36 de commande de rotation a une forme générale de tambour délimitant un logement pour le coulisseau de couplage 68 et l'arbre de guidage 128.

De préférence, la couronne de sortie 52 pour commande de rotation est liée à l'organe 36 de commande de rotation par l'intermédiaire de moyens classiques 130 de limitation de couple. Ces moyens 130 comprennent, par exemple, un ruban annulaire ondulé en acier à ressort intercalé radialement entre une jupe axiale 132 prolongeant la couronne de sortie 52 et l'organe 36 de commande de rotation.

Dans le sixième mode de réalisation de l'invention, la clé 108 forme les premiers moyens de couplage 66 (liant en rotation l'organe 36 de commande de rotation avec le double doigt de commande 24, tout en autorisant la translation de ce double doigt de commande 24). En effet, la clé 108 est solidaire de l'organe 36 de commande de rotation. Par ailleurs, le double doigt de commande 24 coopère comme une clavette avec la clé 108 de façon à lier en rotation, d'une part, le double doigt de commande 24 avec l'organe 36 de commande de rotation et, d'autre part, la clé 108 avec le coulisseau de couplage 68.

Sur les figures 11 à 12, on a représenté plus en détail les éléments de la chaîne cinématique reliant l'arbre moteur 32 de commande de translation avec l'organe 40 de commande de translation.

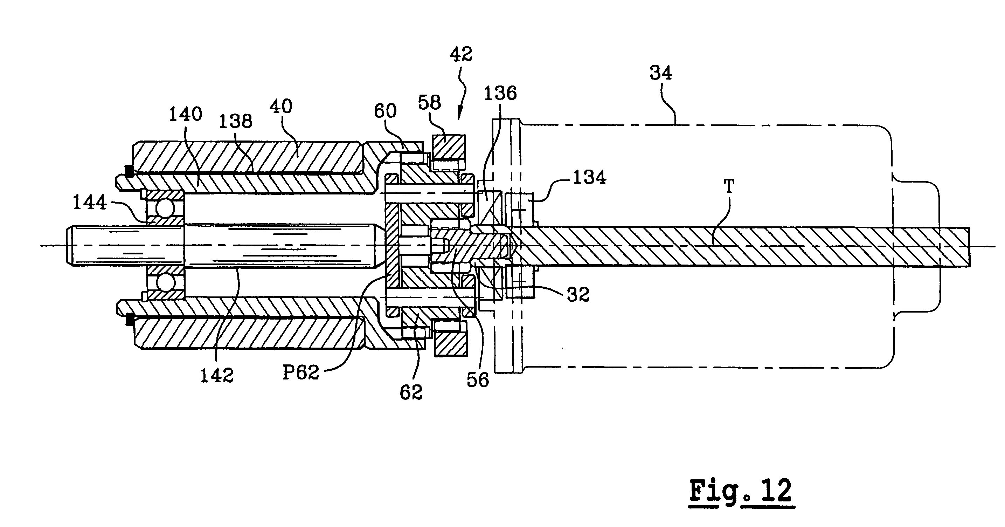

On notera que l'arbre 32 de commande de translation est guidé en rotation par rapport au boîtier 34 de moteur de commande de translation au moyen d'un palier à roulement classique 134. On notera également qu'un joint d'étanchéité classique 136 est intercalé radialement entre l'arbre 32 de commande de translation et le boîtier 34 de moteur de commande de translation (voir figure 12).

Les moyens de réduction 42, associés à l'arbre 32 de commande de translation, sont représentés en détail sur les figures 11 et 12, ces dernières montrant notamment un porte-satellite P62 portant les pignons satellites 62.

On notera que l'organe 40 de commande de translation a une forme générale de tambour.

De préférence, la couronne de sortie 60 pour commande de translation est liée à l'organe 40 de commande de translation par l'intermédiaire de moyens classiques 138 de limitation de couple. Ces moyens 138 comprennent, par exemple, un ruban annulaire ondulé en acier à ressort intercalé radialement entre une jupe axiale 140 prolongeant la couronne de sortie 60 et l'organe 40 de commande de translation.

De préférence, également le rayon du contour externe de l'organe 40 de commande de translation est sensiblement inférieur ou égal au rayon du contour externe de la couronne de sortie 60 pour commande de translation. Dans l'exemple illustré sur la figure 2, le contour externe de l'organe 40 de commande de translation affleure sensiblement le contour externe de la couronne de sortie 60 pour commande de translation.

Ainsi, la rainure hélicoïdale 88, ménagée sur l'organe 40 de commande de translation en forme générale de tambour de relativement grand diamètre, a une inclinaison faible optimisant la coopération avec le pion roulant 90. Par ailleurs, du fait que la rainure hélicoïdale 88 est ménagée sur un tambour de relativement grand diamètre, le pion roulant 90 est relativement proche de l'axe R, limitant ainsi le porte-à-faux du pion roulant 90 par rapport à cet axe R.

L'organe 40, en forme générale de tambour, délimite un logement pour des moyens de guidage et de centrage de différents éléments de la chaîne cinématique représentés sur les figures 11 et 12. Ces moyens de guidage et de centrage comprennent notamment un arbre 142, d'axe coïncidant avec l'axe T de rotation de l'organe 40 de commande de rotation, et un palier à roulement classique 144 intercalé radialement entre l'arbre 142 et une jupe axiale 140 prolongeant la couronne de sortie 60. L'arbre 142 participe au centrage du porte-satellite P62. Le palier à roulement 144 participe donc au guidage en rotation de la couronne de sortie 60.

Dans le sixième mode de réalisation de l'invention, les seconds moyens de couplage 78 (liant en translation le coulisseau de commande 64 avec le double doigt de commande 24 tout en autorisant la rotation de ce doigt 24 indépendamment du coulisseau de commande 64) comprennent un doigt de couplage 146 porté par le coulisseau de commande 64.

Le doigt de couplage 146 est destiné à coopérer avec une rainure 148 ménagée dans le coulisseau de couplage 68. Cette rainure de couplage 148 s'étend sensiblement transversalement à l'arbre support 122 si bien que le coulisseau de couplage 68 peut pivoter autour de l'axe R sans entraîner le doigt de couplage 146 et le coulisseau de commande 64 (voir figures 6 et 11).

En variante, le doigt de couplage 146 pourrait être porté par le coulisseau de couplage 68, la rainure de couplage 148 étant dans ce cas ménagée sur le coulisseau de commande 64.

## Revendications

1. Ensemble de commande pour boîte de vitesses robotisée, du type comprenant :
- un doigt de sélection et de passage de vitesses, dit doigt de commande (24), susceptible d'être entraîné en rotation et en translation par deux organes de commande de rotation (36) et de translation (40) respectivement, ces organes de commande (36, 40) étant motorisés de façon à tourner autour d'axes (R, T) sensiblement parallèles,
- des premiers moyens de couplage (66) liant en rotation l'organe (36) de commande de rotation avec le doigt de commande (24) tout en autorisant la translation de ce doigt de commande (24) sensiblement parallèlement à l'axe (R) de rotation de l'organe (36) de commande de rotation, ces premiers moyens de couplage (66) comprenant un coulisseau de couplage (68), solidaire du doigt de commande (24), l'axe (R) de rotation de l'organe (36) de commande de rotation formant un axe de rotation et de translation de ce coulisseau de couplage (68),
- un coulisseau de commande (64) monté coulissant en translation sur un arbre support (36 ; 122),
- des seconds moyens de couplage (78) liant en translation le coulisseau de commande (64) avec le doigt de commande (24) tout en autorisant la rotation du doigt de commande (24) autour de l'axe (R) de rotation de l'organe (36) de commande de rotation indépendamment du coulisseau de commande (64),
- des moyens (98) d'immobilisation en rotation du coulisseau de commande (64) autour de l'axe (R ; S) de l'arbre support (36 ; 122), portés par un organe (22) indépendant cinématiquement de l'organe (40) de commande de translation, et
- des moyens (86) de transformation du mouvement de rotation de l'organe (40) de commande de translation en mouvement de translation du coulisseau de commande (64), comprenant des moyens complémentaires (86) à came portés par l'organe (40) de commande de translation et le coulisseau de commande (64), **caractérisé en ce que** l'organe (40) de commande de translation est couplé à un arbre moteur (32) de commande de translation par l'intermédiaire de moyens de réduction (42) à train d'engrenage épicycloïdal munis d'une couronne de sortie (60) pour commande de translation couplée en rotation à l'organe (40) de commande de translation.

2. Ensemble selon la revendication 1, **caractérisé en ce que** les moyens (98) d'immobilisation en rotation du coulisseau de commande (64) sont portés par une paroi solidaire du carter (22) de la boîte de vitesses.

3. Ensemble selon la revendication 1 ou 2, **caractérisé en ce que** la came est formée par une rainure hélicoïdale (88), ménagée dans l'organe (40) de commande de translation, coopérant avec un pion roulant (90) porté par le coulisseau de commande (64).

4. Ensemble selon l'une des revendications 1 à 3, **caractérisé en ce que** la couronne de sortie (60) pour commande de translation est liée à l'organe (40) de commande de translation par des moyens (138) de limitation de couple.

5. Ensemble selon l'une des revendications 1 à 4, **caractérisé en ce que** l'organe (40) de commande de translation a une forme générale de tambour, le rayon du contour externe de cet organe (40) de commande de translation étant, de préférence, sensiblement inférieur ou égal au rayon du contour externe de la couronne de sortie (60) pour commande de translation.

6. Ensemble selon la revendication 5, **caractérisé en ce que** l'organe (40) de commande de translation en forme générale de tambour forme un logement pour des moyens (142, 144) de guidage de la couronne de sortie (60) pour commande de translation.

7. Ensemble selon l'une quelconque des revendications 1 à 6, **caractérisé en ce que** l'organe (36) de commande de rotation est couplé à un arbre moteur (28) de commande de rotation par l'intermédiaire de moyens de réduction (38) à train d'engrenage épicycloïdal munis d'une couronne de sortie (52) pour commande de rotation couplée en rotation à l'organe (36) de commande de rotation.

8. Ensemble selon la revendication 7, **caractérisé en ce que** la couronne de sortie (52) pour commande de rotation est liée à l'organe (36) de commande de rotation par des moyens (130) de limitation de couple.

9. Ensemble selon la revendication 7 ou 8, **caractérisé en ce que** l'organe (36) de commande de rotation est lié en rotation à une clé (108) d'interdiction de passage simultané de deux rapports de vitesses, cette clé (108) étant immobilisée axialement.

10. Ensemble selon la revendication 9, **caractérisé en ce que** le coulisseau de couplage (68) est monté coulissant en translation sur un arbre de guidage (128) distinct de l'organe (36) de commande de rotation, les premiers moyens de couplage (66) comprenant la clé (108) d'interdiction de passage simultané de deux rapports de vitesses, le coulisseau de couplage (68) étant lié en rotation à la clé (108) par l'intermédiaire du doigt de commande (24) coopérant comme une clavette avec cette clé (108).

11. Ensemble selon la revendication 10, **caractérisé en ce que** l'organe (36) de commande de rotation a une forme générale de tambour délimitant un logement pour l'arbre de guidage (128) et le coulisseau de couplage (68).

12. Ensemble selon l'une quelconque des revendications 1 à 9, **caractérisé en ce que** le coulisseau de couplage (68) et l'organe (36) de commande de rotation sont montés coulissants en translation l'un sur l'autre, les premiers moyens de couplage (66) comprenant des cannelures complémentaires (C1, C2) ménagées sur l'organe (36) de commande de rotation et le coulisseau de couplage (68), autorisant la translation du coulisseau de couplage (68) sensiblement parallèlement à l'axe (R) de rotation de l'organe (36) de commande de rotation.

13. Ensemble selon l'une quelconque des revendications 1 à 12, **caractérisé en ce que** l'arbre support (122) portant le coulisseau de commande (64) est distinct des organes (36, 40) de commande de rotation et de translation et s'étend sensiblement parallèlement aux axes (R, T) de rotation de ces organes de commande.

14. Ensemble selon la revendication 13, **caractérisé en ce que** les seconds moyens de couplage (78) comprennent :
- un doigt de couplage (146), porté par un premier élément choisi parmi les coulisseaux de commande (34) et de couplage (68), et
- une rainure (148) sensiblement transversale à l'arbre support (122), ménagée dans un second élément choisi parmi les coulisseaux de couplage (68) et de commande (34), avec laquelle le doigt de couplage (146) coopère.

15. Ensemble selon l'une quelconque des revendications 1 à 12, **caractérisé en ce que** l'organe (36) de commande de rotation forme l'arbre support portant le coulisseau de commande (64).

16. Ensemble selon la revendication 15, **caractérisé en ce que** les seconds moyens de couplage (78) comprennent :
- des moyens formant palier (80), portés par le coulisseau de commande (64), dans lesquels tourillonne le coulisseau de couplage (68), et
- des moyens (82, 84) de positionnement relatif axial des coulisseaux de commande (34) et de couplage (68).

17. Ensemble selon la revendication 16, **caractérisé en ce que** les moyens de positionnement relatif axial des coulisseaux de commande (34) et de couplage (68) comprennent deux butées annulaires (82, 84), solidaires axialement du coulisseau de couplage (68), coopérant avec deux extrémités correspondantes du coulisseau de commande (64).

18. Ensemble selon la revendication 16, **caractérisé en ce que** le coulisseau de commande (64) comprend une chape munie de deux joues (64J) formant chacune palier de guidage du coulisseau de couplage (68).

19. Ensemble selon la revendication 18, **caractérisé en ce que** le coulisseau de couplage (68) comprend deux épaulements (68E) de positionnement relatif axial des coulisseaux de commande (34) et de couplage (68) coopérant avec les joues (64J) de la chape.

20. Ensemble selon l'une quelconque des revendications précédentes, **caractérisé en ce que** le coulisseau de commande (64) comprend :
- deux parties, d'entrée (64E) et de sortie (64S) de mouvement respectivement, déplaçables en translation l'une par rapport à l'autre, la partie d'entrée de mouvement (64E) étant entraînée par les moyens (86) de transformation du mouvement de rotation de l'organe (40) de commande de translation en mouvement de translation du coulisseau de commande (64), la partie de sortie de mouvement (64S) entraînant le doigt de commande (24) par l'intermédiaire des seconds moyens de couplage (78), et
- des moyens (117) d'accumulation d'énergie intercalés entre les parties d'entrée (64E) et de sortie (64S) de mouvement.

21. Ensemble selon la revendication 20, **caractérisé en ce que** les moyens d'accumulation d'énergie (112) comprennent un ressort de compression (114) intercalé entre les parties d'entrée et de sortie de mouvement.

22. Ensemble selon la revendication 21, **caractérisé en ce que** le ressort (114) d'accumulation d'énergie est de type hélicoïdal et s'étend autour de l'axe (R) de rotation de l'organe (36) de commande de rotation.

23. Ensemble selon les revendications 1 et 7 prises ensemble, **caractérisé en ce que** les moyens de réduction (38, 42) associés respectivement à l'arbre moteur (28) de commande de rotation et à l'arbre moteur (32) de commande de translation sont logés dans des premier (44) et second (46) boîtiers respectivement, ces premier (44) et second (46) boîtiers étant formés d'une seule pièce munie d'une bride (116) de fixation sur le carter (22) de la boîte de vitesses.

24. Ensemble selon la revendication 23, **caractérisé en ce que** la pièce formant les boîtiers (44, 46) est munie de moyens d'immobilisation en rotation de la couronne fixe (50) des moyens de réduction (38) associés à l'arbre moteur (28) de commande de rotation et de la couronne fixe (58) des moyens de réduction (42) associés à l'arbre moteur (32) de commande de translation.

25. Ensemble selon la revendication 24, **caractérisé en ce que** les moyens d'immobilisation en rotation des couronnes fixes (50, 58) comprennent des formes complémentaires ménagées sur la surface interne de la pièce formant les boîtiers (44, 46) et le contour externe des couronnes fixes (50, 52).

## Patentansprüche

1. Steuereinheit für ein automatisiertes Schaltgetriebe, umfassend:
- einen Wähl- und Schaltnocken, auch Steuernocken (24) genannt, der drehbar und verschiebbar von zwei Steuergliedern zur Steuerung der Rotation (36) bzw. der Verschiebung (40) angetrieben wird, wobei diese Steuerglieder (36, 40) derart motorisiert sind, dass sie um im Wesentlichen parallel zueinander verlaufende Achsen (R, T) drehbar sind,
- erste Kopplungsmittel (66), über welche das Rotations-Steuerglied (36) mit dem Steuernocken (24) drehverbunden ist, und welche gleichzeitig die Verschiebung dieses Steuernockens (24) im Wesentlichen parallel zur Drehachse (R) des Rotations-Steuergliedes (36) zulassen, wobei diese ersten Kopplungsmittel (66) einen an dem Steuernocken (24) befestigten Koppelschieber (68) umfassen, wobei die Drehachse (R) des Rotations-Steuergliedes (36) eine Dreh- und Verschiebeachse dieses Koppelschiebers (68) bildet,
- einen auf einer Stützwelle (36; 122) verschiebbar gelagerten Steuerschieber (64),
- zweite Kopplungsmittel (78), über welche der Steuerschieber (64) verschiebbar mit dem Steuernocken (24) verbunden ist, und welche gleichzeitig die Rotation des Steuernockens (24) um die Drehachse (R) des Rotations-Steuergliedes (36) unabhängig vom Steuerschieber (64) zulassen,
- Mittel (98) zur Drehfixierung des Steuerschiebers (64) um die Achse (R; S) der Stützwelle (36; 122), welche an einem vom Verschiebungs-Steuerglied (40) kinematisch unabhängigen Glied (22) angebracht sind, und
- Mittel (86) zur Umsetzung der Drehbewegung des Verschiebungs-Steuergliedes (40) in eine Verschiebebewegung des Steuerschiebers (64), umfassend komplementäre mit einer Steuerkurve versehene Mittel (86), die am Verschiebungs-Steuerglied (40) und am Steuerschieber (64) angebracht sind,
**dadurch gekennzeichnet,**
**dass** das Verschiebungs-Steuerglied (40) über Untersetzungsmittel (42), die ein Planetengetriebe und einen mit dem Verschiebungs-Steuerglied (40) drehverbundenen Abtriebskranz (60) zur Steuerung der Verschiebung umfassen, mit einer Antriebswelle (32) zur Steuerung der Verschiebung gekoppelt ist.

2. Einheit nach Anspruch 1, **dadurch gekennzeichnet, dass** die Mittel (98) zur Drehfixierung des Steuerschiebers (64) an einer fest mit dem Gehäuse (22) des Schaltgetriebes verbundenen Wand angebracht sind.

3. Einheit nach Anspruch 1 oder 2, **dadurch gekennzeichnet, dass** die Steuerkurve von einer im Verschiebungs-Steuerglied (40) eingebrachten spiralförmigen Nut (88) gebildet ist, die mit einem auf dem Steuerschieber (64) gelagerten Rollstein (90) zusammenwirkt.

4. Einheit nach einem der Ansprüche 1 bis 3, **dadurch gekennzeichnet, dass** der Abtriebskranz (60) zur Steuerung der Verschiebung über Mittel (138) zur Drehmomentbegrenzung mit dem Verschiebungs-Steuerglied (40) verbunden ist.

5. Einheit nach einem der Ansprüche 1 bis 4, **dadurch gekennzeichnet, dass** das Verschiebungs-Steuerglied (40) insgesamt die Form einer Trommel aufweist, wobei der Radius der Außenkontur dieses Verschiebungs-Steuerglieds (40) vorzugsweise im Wesentlichen kleiner oder gleich dem Radius der Außenkontur des Abtriebskranzes (60) zur Steuerung der Verschiebung ist.

6. Einheit nach Anspruch 5, **dadurch gekennzeichnet, dass** das insgesamt trommelförmige Verschiebungs-Steuerglied (40) eine Aufnahme für Führungsmittel (142, 144) zur Führung des Abtriebskranzes (60) zur Steuerung der Verschiebung bildet.

7. Einheit nach einem der Ansprüche 1 bis 6, **dadurch gekennzeichnet, dass** das Rotations-Steuerglied (36) über Untersetzungsmittel (38) mit Planetengetriebe und mit einem mit dem Rotations-Steuerglied (36) drehverbundenen Abtriebskranz (52) zur Steuerung der Rotation mit einer Antriebswelle (28) zur Steuerung der Rotation gekoppelt ist.

8. Einheit nach Anspruch 7, **dadurch gekennzeichnet, dass** der Abtriebskranz (52) zur Steuerung der Rotation über Mittel (130) zur Drehmomentbegrenzung mit dem Rotations-Steuerglied (36) verbunden ist.

9. Einheit nach Anspruch 7 oder 8, **dadurch gekennzeichnet, dass** das Rotations-Steuerglied (36) mit einem das gleichzeitige Einlegen zweier Gänge unterbindenden Schlüssel (108) drehverbunden ist, wobei dieser Schlüssel (108) axial fixiert ist.

10. Einheit nach Anspruch 9, **dadurch gekennzeichnet, dass** der Koppelschieber (68) verschiebbar auf einer Führungswelle (128) gelagert ist, die separat vom Rotations-Steuerglied (36) ausgebildet ist, wobei die ersten Kopplungsmittel (66) den das gleichzeitige Einlegen zweier Gänge unterbindenden Schlüssel (108) umfassen, wobei der Koppelschieber (68) über den Steuernocken (24), der nach Art eines Keils mit diesem Schlüssel (108) zusammenwirkt, mit letzterem (108) drehverbunden ist.

11. Einheit nach Anspruch 10, **dadurch gekennzeichnet, dass** das Rotations-Steuerglied (36) insgesamt die Form einer Trommel aufweist, welche eine Aufnahme für die Führungswelle (128) und für den Koppelschieber (68) begrenzt.

12. Einheit nach einem der Ansprüche 1 bis 9, **dadurch gekennzeichnet, dass** der Koppelschieber (68) und das Rotations-Steuerglied (36) verschiebbar aufeinander gelagert sind, wobei die ersten Kopplungsmittel (66) komplementäre Rillen (C1, C2) umfassen, welche in dem Rotations-Steuerglied (36) und in dem Koppelschieber (68) eingebracht sind und die Verschiebung des Koppelschiebers (68) im Wesentlichen parallel zur Drehachse (R) des Rotations-Steuerglieds (36) zulassen.

13. Einheit nach einem der Ansprüche 1 bis 12, **dadurch gekennzeichnet, dass** die den Steuerschieber (64) tragende Stützwelle (122) separat von den Steuergliedern (36, 40) zur Steuerung der Rotation bzw. der Verschiebung ausgebildet ist und sich im Wesentlichen parallel zu den Drehachsen (R, T) dieser Steuerglieder erstreckt.

14. Einheit nach Anspruch 13, **dadurch gekennzeichnet, dass** die zweiten Kopplungsmittel (78) umfassen:
- einen Koppelbolzen (146), der auf einem ersten Element ausgewählt aus der Gruppe bestehend aus dem Steuerschieber (64) und dem Koppelschieber (68) gelagert ist, und
- eine im Wesentlichen quer zur Stützwelle (122) verlaufende Nut (148), die in einem zweiten Element ausgewählt aus der Gruppe bestehend aus dem Steuerschieber (64) und dem Koppelschieber (68) eingebracht ist und mit der der Koppelbolzen (146) zusammenwirkt.

15. Einheit nach einem der Ansprüche 1 bis 12, **dadurch gekennzeichnet, dass** das Rotations-Steuerglied (36) die den Steuerschieber (64) tragende Stützwelle bildet.

16. Einheit nach Anspruch 15, **dadurch gekennzeichnet, dass** die zweiten Kopplungsmittel (78) umfassen:
- Lager (80) bildende Mittel, die an dem Steuerschieber (64) angebracht sind und in denen der Koppelschieber (68) drehbar gelagert ist, und
- Mittel (82, 84) zur axialen Positionierung des Steuerschiebers (64) und des Koppelschiebers (68) zueinander.

17. Einheit nach Anspruch 16, **dadurch gekennzeichnet, dass** die Mittel zur axialen Positionierung des Steuerschiebers (64) und des Koppelschiebers (68) zueinander zwei ringförmige Anschläge (82, 84) umfassen, die axial einstückig mit dem Koppelschieber (68) verbunden sind und mit zwei entsprechenden Enden des Steuerschiebers (64) zusammenwirken.

18. Einheit nach Anspruch 16, **dadurch gekennzeichnet, dass** der Steuerschieber (64) eine Haube umfasst, die mit zwei Backen (64J) versehen ist, welche jeweils ein Führungslager für den Koppelschieber (68) bilden.

19. Einheit nach Anspruch 18, **dadurch gekennzeichnet, dass** der Koppelschieber (68) zwei mit den Backen (64J) der Haube zusammenwirkende Absätze (68E) zur axialen Positionierung des Steuerschiebers (64) und des Koppelschiebers (68) zueinander umfasst.

20. Einheit nach einem der vorangegangenen Ansprüche, **dadurch gekennzeichnet, dass** der Steuerschieber (64) umfasst:
- zwei Teile, einen für den Bewegungseingang (64E) und einen anderen für den Bewegungsausgang (64S), die gegeneinander verschiebbar sind, wobei der Teil für den Bewegungseingang (64E) durch die Mittel (86) zur Umsetzung der Drehbewegung des Verschiebungs-Steuergliedes (40) in eine Verschiebebewegung des Steuerschiebers (64) mitgenommen wird und wobei der Teil für den Bewegungsausgang (64S) den Steuernocken (24) über zweite Kopplungsmittel (78) mitnimmt, und
- Mittel (112) zur Energiespeicherung, die zwischen dem Teil für den Bewegungseingang (64E) und dem Teil für den Bewegungsausgang (64S) eingesetzt sind.

21. Einheit nach Anspruch 20, **dadurch gekennzeichnet, dass** die Mittel zur Energiespeicherung (112) eine zwischen dem Teil für den Bewegungseingang und dem Teil für den Bewegungsausgang eingesetzte Druckfeder (114) umfassen.

22. Einheit nach Anspruch 21, **dadurch gekennzeichnet, dass** die Feder (114) zur Energiespeicherung eine Spiralfeder ist und sich um die Drehachse (R) des Rotations-Steuerglieds (36) erstreckt.

23. Einheit nach Anspruch 1 und Anspruch 7, **dadurch gekennzeichnet, dass** die jeweils der Antriebswelle (28) zur Steuerung der Rotation und der Antriebswelle (32) zur Steuerung der Verschiebung zugeordneten Untersetzungsmittel (38, 42) jeweils in einem ersten (44) bzw. einem zweiten (46) Gehäuse untergebracht sind, wobei dieses erste (44) und dieses zweite (46) Gehäuse von einem einzigen Bauteil gebildet werden, das mit einem Flansch (116) zur Befestigung an das Gehäuse (22) des Schaltgetriebes versehen ist.

24. Einheit nach Anspruch 23, **dadurch gekennzeichnet, dass** das die Gehäuse (44, 46) bildende Bauteil mit Mitteln zur Drehfixierung des feststehenden Kranzes (50) der der Antriebswelle (28) zur Steuerung der Rotation zugeordneten Untersetzungsmittel (38) sowie des feststehenden Kranzes (58) der der Antriebswelle (32) zur Steuerung der Verschiebung zugeordneten Untersetzungsmittel (42) versehen ist.

25. Einheit nach Anspruch 24, **dadurch gekennzeichnet, dass** die Mittel zur Drehfixierung der feststehenden Kränze (50, 58) komplementäre Formen umfassen, die auf der Innenfläche des die Gehäuse (44, 46) bildenden Bauteils und auf der Außenkontur der feststehenden Kränze (50, 58) ausgebildet sind.

## Claims

1. Control assembly for a robotised gearbox, of the type comprising:
- a gear selection and change finger, referred to as the control finger (24), able to be driven in rotation and translation by two respectively rotation (36) and translation (40) control members, these control members (36, 40) being motorised so as to rotate about substantially parallel axes (R, T),
- first coupling means (66) rotationally connecting the rotation control member (36) with the control finger (24) whilst allowing the translation of this control finger (24) substantially parallel to the rotation axis (R) of the rotation control member (36), these first coupling means (66) comprising a coupling slide (68) fixed to the control finger (24), the rotation axis (R) of the rotation control member (36) forming a rotation and translation axis for this coupling slide (68),
- a control slide (64) mounted so as to slide in translation on a support shaft (36; 122),
- second coupling means (78) translationally connecting the control slide (64) with the control finger (24) whilst allowing the rotation of the control finger (24) about the rotation axes (R) of the rotation control member (36) independently of the control slide (64),
- means (98) of rotationally immobilising the control slide (64) about the axis (R; S) of the support shaft (36; 122), carried by a member (22) kinematically independent of the translation control member (4), and
- means (86) of converting the rotation movement of the translation control member (40) into a translation movement of the control slide (64), comprising complementary cam means (86) carried by the translation control member (40) and the control slide (64), **characterised in that** the translation control member (40) is coupled to a translation control drive shaft (32) by means of epicyclic gear train reduction means (42) provided with an output ring (60) for translation control rotationally coupled to the translation control member (40).

2. Assembly according to claim 1, **characterised in that** the means (98) of rotationally immobilising the control slide (64) are carried by a wall fixed to the gearbox casing (22).

3. Assembly according to claim 1 or 2, **characterised in that** the cam is formed by a helical groove (88), provided in the translation control member (40), cooperating with a travelling stud (90) carried by the control slide (64).

4. Assembly according to one of claims 1 to 3, **characterised in that** the output ring (60) for translation control is connected to the translation control member (40) by torque limitation means (138).

5. Assembly according to one of claims 1 to 4, **characterised in that** the translation control member (40) has the general shape of a drum, the radius of the external contour of this translation control member (40) preferably being substantially less than or equal to the radius of the external contour of the output ring (60) for translation control.

6. Assembly according to claim 5, **characterised in that** the translation control member (40) in the general shape of a drum forms a housing for means (142, 144) of guiding the output ring (60) for translation control.

7. Assembly according to any one of claims 1 to 6,
**characterised in that** the rotation control member (36) is coupled to a rotation control drive shaft (28) by means of epicyclic gear train reduction means (38) provided with an output ring (52) for rotation control rotationally coupled to the rotation control member (36).

8. Assembly according to claim 7, **characterised in that** the output ring (52) for rotation control is connected to the rotation control member (36) by torque limitation means (130).

9. Assembly according to claim 7 or 8, **characterised in that** the rotation control member (36) is rotationally connected to a key (108) preventing the simultaneous change of two gear ratios, this key (108) being immobilised axially.

10. Assembly according to claim 9, **characterised in that** the coupling slide (68) is mounted so as to slide in translation on a guide shaft (128) distinct from the rotation control member (36), the first coupling means (66) comprising the key (108) for preventing simultaneous change of two gear ratios, the coupling slide (68) being rotationally connected to the key (180) by means of the control finger (24) cooperating as a dog with this key (108).

11. Assembly according to claim 10, **characterised in that** the rotation control member (36) has the general shape of a drum delimiting a housing for the guide shaft (128) and a coupling slide (68).

12. Assembly according to any one of claims 1 to 9, **characterised in that** the coupling slide (68) and the rotation control member (36) are mounted so as to slide in translation on each other, the first coupling means (66) comprising complementary flutes (C1, C2) provided on the rotation control member (36) and the coupling slide (68), allowing the translation of the coupling slide (68) substantially parallel to the rotation axis (R) of the rotation control member (36).

13. Assembly according to any one of claims 1 to 12, **characterised in that** the support shaft (122) carrying the control slide (64) is distinct from the rotation and translation control members (36, 40) and extends substantially parallel to the rotation axes (R, T) of these control members.

14. Assembly according to claim 13, **characterised in that** the second coupling means (78) comprise:
- a coupling finger (146) carried by a first element chosen from amongst the control (34) and coupling (68) slides, and
- a groove (148) substantially transverse to the support shaft (122) formed in a second element chosen from amongst the coupling (68) and control (34) slides, with which the coupling finger (146) cooperates.

15. Assembly according to any one of claims 1 to 12, **characterised in that** the rotation control member (36) forms the support shaft carrying the control slide (64).

16. Assembly according to claim 15, **characterised in that** the second coupling means (78) comprise:
- means forming a bearing (80), carried by the control slide (64), in which the coupling slide (68) pivots, and
- means (82, 84) for the relative axial positioning of the control (34) and coupling (68) slides.

17. Assembly according to claim 16, **characterised in that** the relative axial positioning means of the control (34) and coupling (68) slides comprise two annular stops (82, 84), axially fixed to the coupling slide (68), cooperating with two corresponding ends of the control slide (64).

18. Assembly according to claim 16, **characterised in that** the control slide (64) comprises a fork joint provided with two cheeks (64J) each forming a guide bearing for the coupling slide (68).

19. Assembly according to claim 18, **characterised in that** the coupling slide (68) comprises two shoulders (68E) for the relative axial positioning of the control (34) and coupling (68) slides cooperating with the cheeks (64J) of the fork joint.

20. Assembly according to any one of the preceding claims, **characterised in that** the control slide (64) comprises:
- two movement input (64E) and output (64S) parts respectively, movable in translation with respect to each, the movement input part (64E) being driven by means (86) of converting the rotation movement of the translation control member (40) into a translation movement of the control slide (64), the movement output part (64S) driving the control finger (34) by means of the second coupling means (78), and
- energy accumulation means (117) interposed between the movement input (64E) and output (64S) parts.

21. Assembly according to claim 20, **characterised in that** the energy accumulation means (112) comprise a compression spring (114) interposed between the movement input and output parts.

22. Assembly according to claim 21, **characterised in that** the energy accumulation spring (114) is of the helical type and extends around the rotation axis (R) of the rotation control member (36).

23. Assembly according to claims 1 and 7 taken together, **characterised in that** the reduction means (38, 42) associated respectively with the rotation control drive shaft (28) and with the translation control drive shaft (32) are housed in first (44) and second (46) casings respectively, these first (44) and second (46) casings being formed in a single piece provided with a flange (116) for fixing to the housing (22) of the gearbox.

24. Assembly according to claim 25, **characterised in that** the piece forming the casings (44, 46) is provided with means of rotationally immobilising the fixed ring (50) of the reduction means (38) associated with the rotation control drive shaft (28) and the fixed ring (58) of the reduction means (42) associated with the translation control drive shaft (32).

25. Assembly according to claim 24, **characterised in that** the means of rotationally immobilising the fixed rings (50, 58) comprise complementary shapes formed on the internal surface of the piece forming the casings (44, 46) and the external contour of the fixed rings (50, 52).
